# EUROPEAN PATENT SPECIFICATION

(11) **EP 3 401 700 B1**
(45) Date of publication and mention of the grant of the patent: **11.09.2024**
(21) Application number: 15904082.3
(22) Date of filing: 16.09.2015
(51) Int. Cl.: G01S 15/60, G01S 7/52, G01P 5/24

(54) **SHIP SPEED GAUGE AND METHOD FOR OBTAINING SHIP SPEED**
SCHIFFSGESCHWINDIGKEITSMESSER UND VERFAHREN ZUM ERHALT EINER SCHIFFSGESCHWINDIGKEIT
INDICATEUR DE VITESSE DE BATEAU ET PROCÉDÉ D'OBTENTION DE VITESSE DE BATEAU

(43) Date of publication of application: 14.11.2018
(73) Proprietor: Furuno Electric Co., Ltd., Nishinomiya-City, Hyogo 622-8580 (JP)
(72) Inventor: ANDO, Hideyuki, Tokyo 100-0005 (JP); TANIGAWA, Masahiko, Tokyo 100-0005 (JP); HIGOSAKI, Ai, Tokyo 100-0005 (JP); KAWANAMI, Satoshi, Nishinomiya Hyogo 662-8580 (JP); MUSHIAKE, Masahiko, Nishinomiya Hyogo 662-8580 (JP)
(74) Representative: CSY London
(86) International application number: PCT/JP2015/076302
(87) International publication number: WO 2017/046893

(56) References cited:
- EP-A1- 2 816 359
- WO-A1-2014/199758
- JP-A- 2013 167 560
- US-A1- 2010 106 349

## Description

The present disclosure relates to an art for measuring a log speed of a ship, and particularly to an art effective when applied to a ship speedometer and a ship speed acquiring method, in which a ship speed is measured at a plurality of depths.

As an art for improving accuracy of measuring a log speed (ship speed) of a ship by an acoustic (Doppler type) ship speedometer or electromagnetic ship speedometer, for example, JP2013-167560A (Patent Document 1) discloses a ship speedometer including a transmitter which transmits a sound wave toward a seabed, a receiver which detects a plurality of reflection waves which are reflection waves of the sound wave transmitted from the transmitter and reflected on a plurality of reflection objects located at different water depths, and an arithmetic processor which calculates a log speed of the ship based on a frequency difference between the sound wave and the reflection wave. Here, the arithmetic processor obtains a change rate of a current speed in the water depth direction by obtaining current speeds at a plurality of different water depths based on a frequency difference between the sound wave and each of the plurality of reflection waves, and calculates the current speed at a water depth at which the change rate is lower than a given threshold as the log speed of the ship.

According to the conventional art described in Patent Document 1, the thickness of an actual boundary layer is grasped by obtaining the current speeds at the plurality of points below a bottom of the ship and the log speed is obtained based on a current speed in a range deeper than the boundary layer, so that even when the thickness of the boundary layer changes due to various factors, an accurate log speed can always be obtained. Meanwhile, it has been known from a development of a simulation technique etc. that a flow field around a ship body has, in addition to the influence of the boundary layer, a factor which causes a speed gradient, and the influence thereof reaches a considerable depth with an actual ship. Therefore, although depending on a size, shape etc. of the ship body, the log speed may not sufficiently grow until a depth of about 100 meters (not in the order of several tens of centimeters or several meters).

In this regard, for example, a general acoustic ship speedometer is only capable of performing a measurement, at sufficiently maintained accuracy, to a water depth of about 50 meters, and cannot obtain sufficient accuracy within a deeper range due to a reduction of an SN ratio. Therefore, the log speed cannot be measured at the depth of about 100 meters from which the log speed sufficiently grows. Even with a multi-layered tidal current meter, an ultrasonic multi-layered current meter (ADCP: Acoustic Doppler Current Profiler) etc. which are capable of measuring up to a depth of about 150 meters, it is difficult to obtain sufficient accuracy at the depth of about 100 meters.

Therefore, the purpose of the present disclosure is to provide a ship speedometer and a ship speed acquiring method, in which log speeds at individual water depths are obtained accurately to a depth where the log speed sufficiently grows.

WO 2014/199758 discloses a Doppler shift frequency measuring device equipped with a transducer that transmits ultrasonic waves into water and receives echo signals of the ultrasonic waves. The transducer has a main lobe directed in the direction of a predetermined depression angle, and a side lobe, the main direction of which is the vertical direction and that opens into an umbrella shape at a designated angle from the main lobe. A filter removes from the echo signals received by the transducer the signal components that are in a cut-off band predetermined by making the frequency of the ultrasonic waves the centre frequency. A frequency detecting unit detects the Doppler shift frequencies of those of the echo signal components at the main lobe that are included in the echo signals from which the signal components in the cut-off band have been removed.

According to one aspect of the present invention there is provided a ship speedometer for measuring a log speed of a ship as defined in claim 1.

According to another aspect of the present invention there is provided a method of measuring a log speed of a ship as defined in claim 6.

Preferred features of the invention are recited in the dependent claims.

In the disclosure made in the present application, a representative aspect is briefly described as follows.

A ship speedometer according to the representative aspect of the present disclosure is a ship speedometer for measuring a log speed of a ship. The ship speedometer measures, in a fluid where the ship floats, a speed of a current at a plurality of different water depths within a given measurement range, conforms a theoretical curve of a log speed for individual water depths, provided in advance and calculated in relation to the ship, to a distribution of the current speeds for the individual water depths, and calculates a log speed at an arbitrary water depth within a deeper range of the measurement range based on the conformed theoretical curve.

In the disclosure made in the present application, an effect obtained by the representative aspect is briefly described as follows.

That is, according to the representative aspect of the present disclosure, it is possible to accurately calculate the log speeds at individual water depths to a depth where the log speed sufficiently grows.

### BRIEF DESCRIPTION OF THE DRAWINGS

Fig. 1 is a diagram illustrating an outline of a configuration example of a ship speedometer according to a first embodiment of the present disclosure.
Fig. 2 is a flowchart illustrating an outline of an example of a flow of ship speed acquiring processing according to the first embodiment of the present disclosure.
Fig. 3 shows views illustrating an outline of an example of a method of estimating an individual-depth ship speed theoretical curve according to the first embodiment of the present disclosure.
Fig. 4 is a view illustrating an outline of another example of the method of estimating the individual-depth ship speed theoretical curve according to the first embodiment of the present disclosure.
Fig. 5 is a view illustrating an outline of an example of a divergence between a log speed distribution and an individual-depth ship speed theoretical curve based on measurement data according to a second embodiment of the present disclosure.
Fig. 6 is a flowchart illustrating an outline of an example of a flow of tidal current estimation processing according to the second embodiment of the present disclosure.

### DESCRIPTION OF THE INVENTION

Hereinafter, embodiments of the present disclosure are described in detail based on the drawings. Note that throughout the drawings illustrating the embodiments, the same reference characters are assigned to the same parts in principle and the repetitive description thereof is omitted. On the other hand, parts described by assigning reference characters in a certain drawing may be referred to when explaining the other drawings, by assigning the same reference characters without repetitive illustration.

### (First Embodiment)

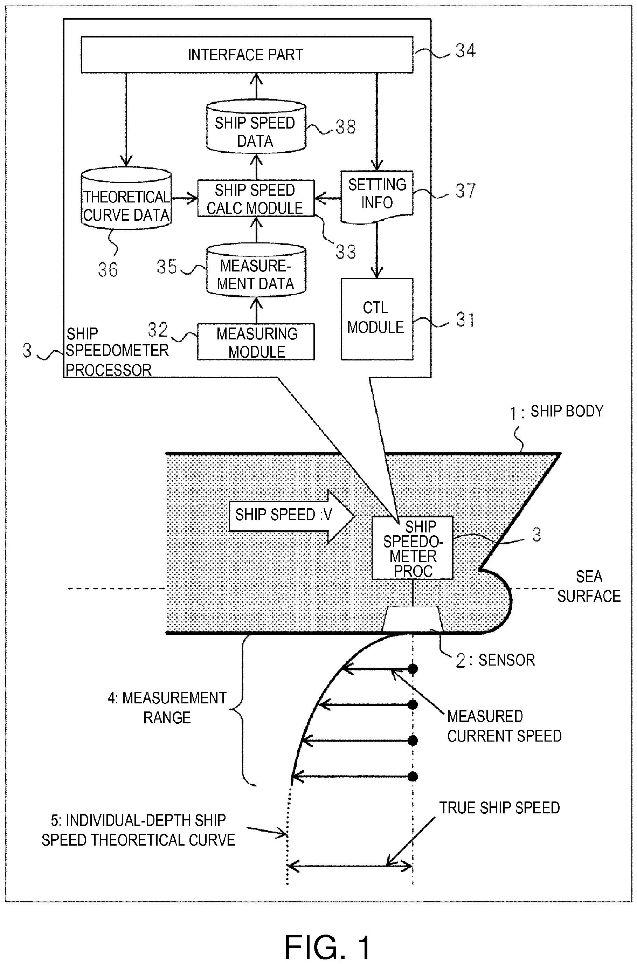

Fig. 1 is a diagram illustrating an outline of a configuration example of a ship speedometer according to a first embodiment of the present disclosure. In view of the issue that the general acoustic ship speedometer, multi-layered tidal current meter, ADCP etc., are not capable of measuring a log speed at sufficient accuracy at a water depth of about 100 meters where the log speed sufficiently grows as described above, the ship speedometer of this embodiment may measure a current speed (log speed) at a plurality of depths below a bottom of a ship to a given measurable depth by using, for example, a similar art to that described in Patent Document 1, and estimate the log speed in a deeper range, that is, in a range deeper than a boundary layer and where the current speed sufficiently grows, based on a distribution of the obtained current speeds for the individual water depths.

Although in this embodiment, an acoustic (Doppler) ship speedometer is described as an example, it is theoretically possible to apply a similar method to other types of ship speedometers, tidal current meters, etc. Note that, although "water depth," in correct, indicates a depth from a water surface or a fluid surface on which a ship body 1 floats, such as a sea surface, in the following description, the depth from a bottom surface of the ship body 1 may be described as "water depth" for the sake of convenience.

The ship speedometer of this embodiment may be comprised of, for example, a sensor 2 and a ship speedometer processor 3 which are installed in the ship body 1. The sensor 2 may be comprised of, for example, a transducer which is installed, for example, in or near a bottom part of the ship body 1, transmits a pulse-shaped sound wave at a given frequency toward a seabed, receives a reflection wave thereof, and outputs information on a time difference between the transmission and the reception, the frequency of the received reflection wave, etc.

Note that, although in the example of Fig. 1, the configuration in which one sensor 2 is installed, transmits the sound wave in the given direction toward the seabed and obtains, based on the measured current speed component in this direction, a current speed (log speed) in a bow-to-stern direction of the ship body 1 is described, it is not limited to such a configuration. For example, a configuration in which a current speed in an arbitrary direction other than the bow-to-stern direction is calculated may be adopted. Further, a configuration in which a plurality of sensors 2 for transmitting sound waves in different directions (hereinafter, may be referred to as "measuring directions") are provided may be adopted so that a current speed (log speed) in an arbitrary direction is obtained as a component of current speeds in the measuring directions of the respective sensors 2 (or a combination thereof).

The ship speedometer processor 3 may have a function of controlling the operation of the sensor 2 as well as acquiring an output result from the sensor 2 and performing processing, such as a calculation of a ship speed V, etc. The ship speedometer processor 3 may be implemented as dedicated hardware comprised of an integrated circuit, a storage device, an input/output device, etc. designed to achieve respective functions described later, or as a general-purpose information processor, such as a PC (Personal Computer), and software which runs thereon etc.

The ship speedometer processor 3 may include, for example, various parts, such as a controlling module 31, a measuring module 32, a ship speed calculating module 33, and an interface unit 34, and various data stores, such as measurement data 35, theoretical curve data 36, setting information 37, and ship speed data 38. The controlling module 31 may have a function of controlling operation of the various parts of the ship speedometer processor 3 either automatically based on contents of the preset setting information 37 etc. or manually based on an instruction from a user etc. via the interface unit 34 described later. The measuring module 32 may have a function of measuring with the sensor 2 and acquiring a result thereof. Specifically, as described above, data on a time difference between the transmission of the transmission wave from the sensor 2 and the reception of the reflection wave and a frequency of the reflection wave may be acquired. The acquired data may be stored, for example, in time series as the measurement data 35.

The ship speed calculating module 33 may have a function of calculating a true ship speed V, that is, a current speed (log speed) at a depth where the current speed sufficiently grows, by a method described later based on the contents of the measurement data 35 with reference to contents of the setting information 37 etc., and storing the calculation result as the ship speed data 38. The interface unit 34 may have a function of providing an input/output interface for the ship speedometer processor 3. For example, it may output the contents of the ship speed data 38 calculated by the ship speed calculating module 33, by displaying it on a display (not illustrated) etc. Further, it may perform an input/output of stored data, such as the ship speed data 38 and the measurement data 35, and the theoretical curve data 36 described later, via an external recording medium, which is not illustrated, or a network. Moreover, it may accept an input of an operation instruction from the user and the data via a control panel, a remote controller, a touch panel etc. comprised of button(s), dial(s), etc. which are not illustrated.

As described above, the conventional art described in Patent Document 1 has a multi-layered configuration for obtaining the current speeds at the plurality of depths below the bottom of the ship, in which the thickness of the actual boundary layer is grasped based on the current speed distribution of each layer for the individual water depth, and the log speed is obtained based on the current speed in a range deeper than the boundary layer. Meanwhile, the development of simulation technology has led to finding that, for example, in a huge ship body 1 having a total length over 200 meters or 300 meters, the log speed may not sufficiently grow until reaching a depth of about 100 meters. In this case, in the conventional art as described in Patent Document 1, due to the performance of the acoustic ship speedometer, sufficient measurement accuracy may not be obtained in a range deeper than about 50 meters, and an accurate ship speed may not be obtained.

Therefore in this embodiment, while a multi-layered configuration for obtaining current speeds at a plurality of depths below the bottom of the ship may be provided similarly to the conventional art described in Patent Document 1, a depth for which the log speed calculated based on the actual measurement data measured by the sensor 2 and the measuring module 32 is used as the log speed of each layer for the individual water depth may be limited within a given range where the sufficiently accurate measurement is possible ("measurement range 4" in Fig. 1). The depth of the measurement range 4, although varies depending on the performance etc. of the sensor 2, may be, for example, about 50 meters or less. Further, for a range deeper than the measurement range 4, as will be described later, a theoretical curve (a dotted line of "INDIVIDUAL-DEPTH SHIP SPEED THEORETICAL CURVE 5" in Fig. 1) estimated in advance may be conformed to a distribution of log speeds in the measurement range 4 to extrapolate it.

Thus, for example, the log speed calculated based on the actual measurement data may be used to the depth of the measurement range 4, and in the deeper range, the log speed of each layer for the individual water depth may be calculated based on the individual-depth ship speed theoretical curve 5 instead of on the actual measurement data, and the true ship speed in the water depth range of about 100 meters where the current speed sufficiently grows may also be estimated with high accuracy.

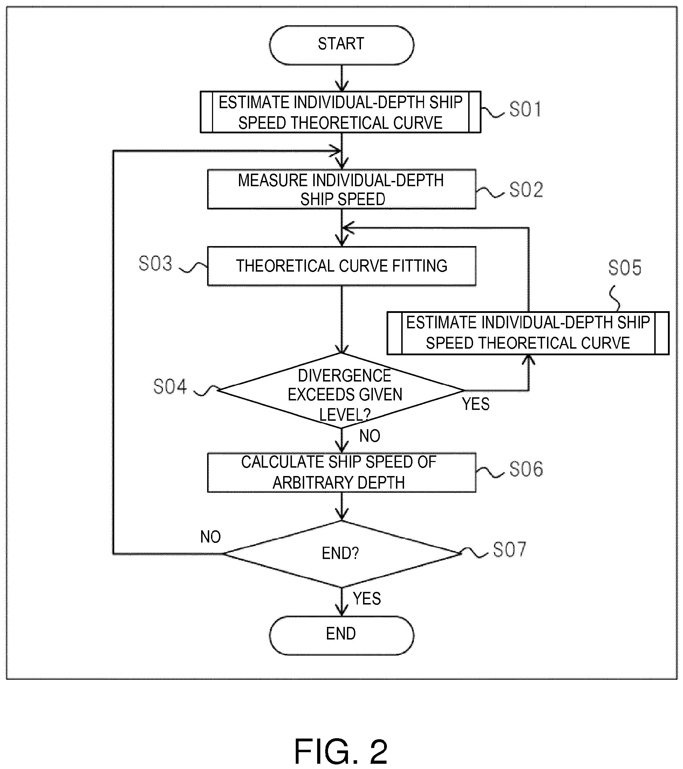

Fig. 2 is a flowchart illustrating an outline of an example of a flow of ship speed acquiring processing according to this embodiment. First, as an advance preparation, the individual-depth ship speed theoretical curve 5 applicable to the ship body 1 on which the ship speedometer is installed may be estimated (Step S01). Although this processing may need to be performed at least before the operation of the ship speedometer of this embodiment, the individual-depth ship speed theoretical curve 5 may also be updated thereafter by performing this processing as needed or periodically. Although there is no particular limitation on the method of calculating the individual-depth ship speed theoretical curve 5, for example, a method of estimating it based on actual measurement data from an actual ship, a method of estimating it by a simulation on a computer system, etc. may be adopted.

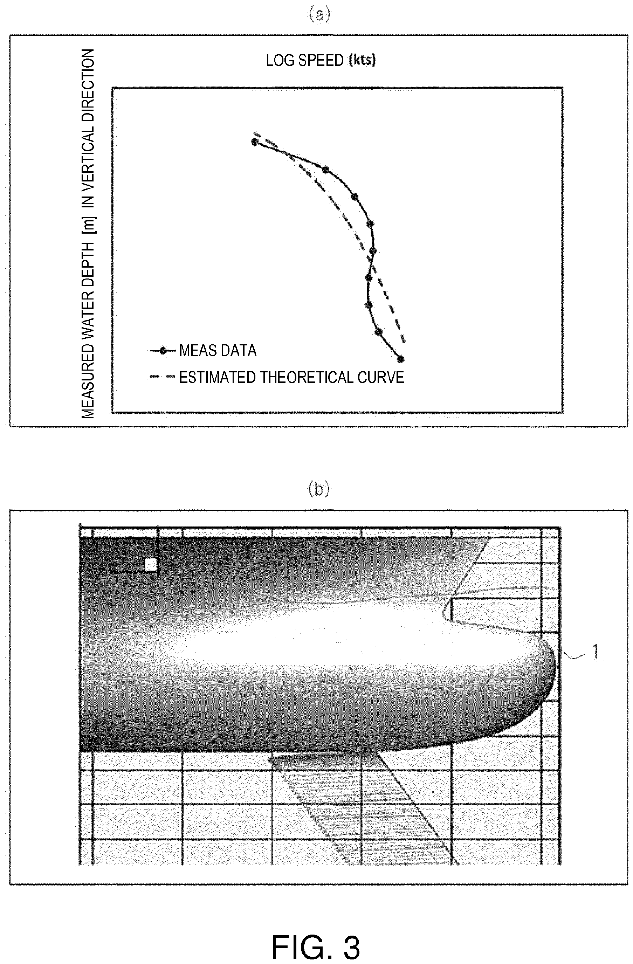

Fig. 3 shows views illustrating an outline of an example of a method of estimating the individual-depth ship speed theoretical curve 5. Part (a) of Fig. 3 illustrates an example of estimating it from the actual measurement data from the actual ship. For example, in an actual ship on which the ship speedometer of this embodiment is installed, a situation where a disturbance to the measurement caused by a tidal current etc. is considered small may be determined to be suitable for estimating the individual-depth ship speed theoretical curve 5, and the individual-depth ship speed theoretical curve 5 ("ESTIMATED THEORETICAL CURVE" in the drawing) may be obtained by approximating the measured measurement data 35 ("MEASUREMENT DATA" in the drawing) with a power curve etc. as illustrated in the drawing.

Further, when it is difficult to obtain the measurement data, the individual-depth ship speed theoretical curve 5 may alternatively be estimated by a simulation, such as a Computational Fluid Dynamics (CFD) analysis. For example, the flow around the ship body 1 may be obtained by a simulation with the CFD, and the log speed for the individual water depth to be measured in this embodiment may be extracted therefrom. Part (b) of Fig. 3 illustrates an example when the log speed for the individual water depth is simulated by the CFD. The individual-depth ship speed theoretical curve 5 may be obtained by approximating the log speed for the individual water depth obtained here by a power curve etc. similarly to Part (a) of Fig. 3. Note that the individual-depth ship speed theoretical curve 5 may alternatively be calculated for a plurality of patterns, for an individual pattern, such as a shape or a navigation condition or a depth of drift of the ship body 1, or an environment parameter.

Further, depending on the actual installation mode of the sensor 2 to the ship body 1, in considerations of the direction in which one or the plurality of sensors 2 transmit the sound waves, etc., components of the log speed in respective measuring directions, the log speed in three dimensions by combining the components in the respective measuring directions, etc. may alternatively be obtained by a simulation similarly to the example illustrated in Part (b) of Fig. 3. Moreover, when estimating the individual-depth ship speed theoretical curve 5, a manual correction may be added to a theoretical curve calculated by a given algorithm etc. based on a further empirical consideration.

In addition, the calculation processing of the individual-depth ship speed theoretical curve 5, including the simulation by CFD etc., may not necessarily be performed by the ship speed processor 3, but may be calculated using other system, software, etc. In this case, the calculated data of the individual-depth ship speed theoretical curve 5 may be taken into the ship speedometer processor 3 via the interface unit 34 and stored as the theoretical curve data 36 in advance.

Return to Fig. 2, in the state where the individual-depth ship speed theoretical curve 5 is estimated and stored in the theoretical curve data 36 in advance at Step S01, a ship speed in an actual navigation of the ship may be acquired. First, the log speed of each layer for the individual water depth in the measurement range 4 may be measured and calculated (Step S02). For example, by having n layers of d₁, d₂,..., dₙ for the depths to be measured, the log speeds Vₛ₁, Vₛ₂,..., Vₛₙ may be calculated for the respective layers. In the calculation of each log speed, as described above, the data of the time difference between the transmission of the transmission wave from the sensor 2 and the reception of the reflection wave and the frequency of the reflection wave may be acquired in the measuring module 32 of the ship speedometer processor 3 to be stored as the measurement data 35, and further the log speed for the individual water depth may be calculated by the ship speedometer calculating module 33 based on the measurement data 35 in a similar method to the art described in Patent Document 1. Here, in order to reduce the influence of the disturbance from a ship motion etc., a moving average between 10 seconds and about several tens of seconds may preferably be used as the measurement data 35.

Then, the ship speed calculating module 33 may conform the individual-depth ship speed theoretical curve 5 stored in the theoretical curve data 36, to the distribution of the log speeds for the individual water depths in the calculated measurement range 4 (Step S03). The method of conforming (fitting) is not particularly limited, and an arbitrary method or algorithm may suitably be used. For example, among the individual-depth ship speed theoretical curves 5 stored in the theoretical curve data 36 for the plurality of individual patterns or environment parameter, one which is closest to an actual log speed distribution in the measurement range 4 may be selected. A further correction may be added to the selected curve according to an actual value of the log speed distribution within the measurement range 4.

Then, whether a divergence in the measurement range 4 between the log speed distribution actually measured at Step S02 and the individual-depth ship speed theoretical curve 5 conformed to this at Step S03 exceeds a given level may be determined (Step S04). The determining method of the level of the divergence is not particularly limited, and for example, the determination may be based on whether an accumulation of a difference between the log speed actually measured in each layer and a theoretical value exceeds a given threshold, or based on the level of variation in the difference in each layer. Alternatively, weighting in the evaluation of the difference may be changed between a shallow water range and a deep water range. Further, the determination may be made based on a tendency of divergence in a given period of time instead of the determination in one measurement.

If the divergence is determined to be equal to or greater than the given level at Step S04, the individual-depth ship speed theoretical curve 5 may be estimated again by a similar method to Step S01 (Step S05). In this estimation, the accuracy of the individual-depth ship speed theoretical curve 5 may be improved by adding into consideration data of a plurality of log speed distributions actually measured at Step S02 and other opportunities.

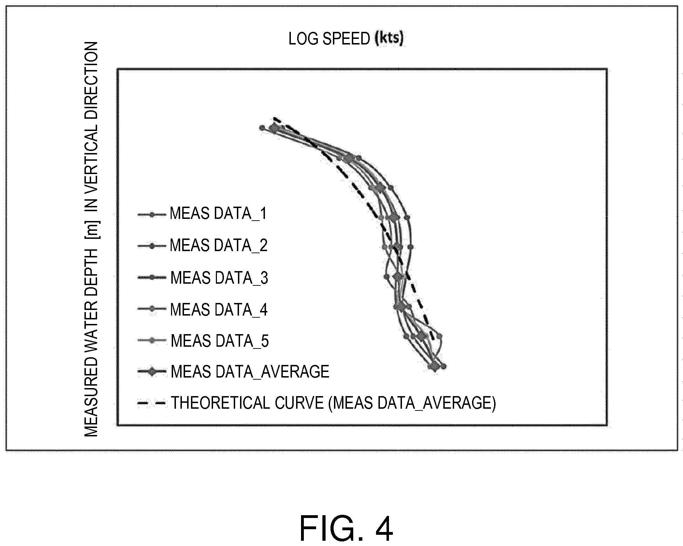

Fig. 4 is a view illustrating an outline of another example of the method of estimating the individual-depth ship speed theoretical curve 5. Here, it is shown that statistical information of a plurality of measurement data 35 ("MEAS DATA_1" to "MEAS DATA_5" in the drawing) previously obtained in the actual navigation, such as an average thereof ("MEAS DATA_AVERAGE" in the drawing) may be obtained for the individual water depth, and this may be approximated by, for example, a power curve to obtain the individual-depth ship speed theoretical curve 5 ("THEORETICAL CURVE (MEAS DATA_AVERAGE)" in the drawing). Thus, a more accurate individual-depth ship speed theoretical curve 5 may be obtained. Based on the individual-depth ship speed theoretical curve 5 updated by such processing, Step S03 and subsequent processings may be repeated.

If the divergence is determined to be less than the given level at Step S04, based on the individual-depth ship speed theoretical curve 5 conformed at Step S03, the log speed of an arbitrary depth may be calculated in the deeper range than the measurement range 4 (Step S06). The calculation of the log speed may be carried out for each layer for a plurality of individual given water depths, or may be carried out for a depth given in the setting information 37 etc. as the depth at which the current speed sufficiently grows, so that the obtained current speed is outputted as the true log speed. Alternatively, the log speed may be individually calculated for arbitrary depth(s) specified by the user via the interface unit 34.

The values of the log speeds of the respective layers for the individual water depths calculated in the measurement range 4 and the deeper range at Steps S02 and S06 may be outputted via the interface unit 34 by a given method in, for example, the setting information 37, or another given method specified by the user.

Then, whether termination of the ship speed acquiring processing is requested is determined based on an instruction from the user via the interface unit 34, an instruction from the controlling module 31 upon a given condition (e.g., stopping the ship) etc. (Step S07), and if the termination request is not issued, Step S02 and the subsequent processings may be repeated to continue the ship speed acquiring processing. If the termination request is issued, the ship speed acquiring processing may be terminated.

As described above, according to the ship speedometer in the first embodiment of the present disclosure, the depth for which the log speed calculated based on the actual measurement data obtained by the sensor 2 etc. is used as the log speed of each layer for the individual water depth may be limited to the measurement range 4, and within a deeper range of the measurement range 4, the individual-depth ship speed theoretical curve 5 estimated in advance may be conformed to the actual log speed distribution within the measurement range 4 to extrapolate it. Thus, also within the deeper range than the measurement range 4, the log speed of each layer for the individual water depth may be estimated accurately based on the individual-depth ship speed theoretical curve 5.

### (Second Embodiment)

In the first embodiment described above, the individual-depth ship speed theoretical curve 5 may be conformed to the distribution of the log speeds calculated based on the actual measurement data obtained by the sensor 2 etc., and here, if the level of divergence between the distribution of the log speed, which is based on the actual measurement data, and the individual-depth ship speed theoretical curve 5 is large, the individual-depth ship speed theoretical curve 5 may be estimated again as indicated at Step S05 of Fig. 2, assuming that the individual-depth ship speed theoretical curve 5 is not optimum.

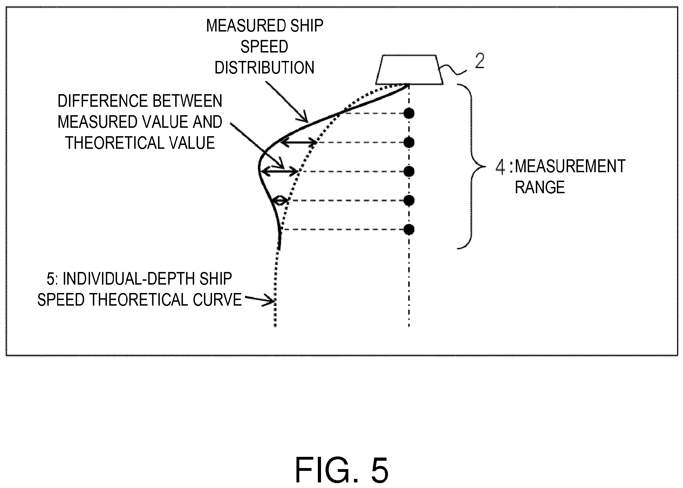

Meanwhile, the divergence between the log speed based on the actual measurement data and the individual-depth ship speed theoretical curve 5 may also occur when the disturbance by the tidal current exists around the ship body 1. Fig. 5 is a view illustrating an outline of an example of the divergence between the log speed distribution based on the actual measurement data and the individual-depth ship speed theoretical curve 5. It shows that the log speed distribution based on the actual measurement data is different from the individual-depth ship speed theoretical curve 5 obtained by the similar method to that in the first embodiment. With the ship speedometer according to the second embodiment of the present disclosure, this difference may be considered to be caused by the tidal current around the ship body 1 and a tidal current distribution for the individual water depth may be estimated.

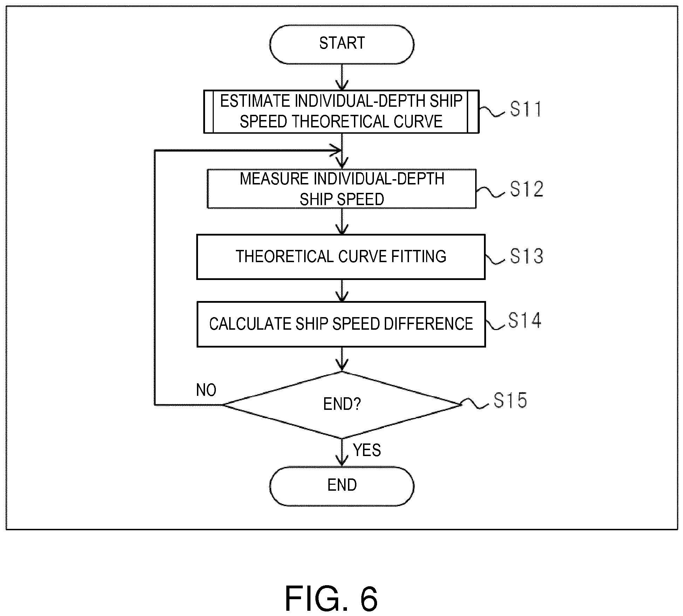

Fig. 6 is a flowchart illustrating an outline of an example of a flow of tidal current estimation processing according to this embodiment. Since the estimation processing of the individual-depth ship speed theoretical curve 5 (Step S11) as the advance preparation, the ship speed measuring processing in the actual ship navigation (Step S12), and the fitting processing of the individual-depth ship speed theoretical curve 5 (Step S13) are similar to Steps S01 to S03 in the flowchart illustrated in Fig. 2 of the first embodiment, the redundant description is omitted.

Then, a difference in the measurement range 4 between the log speed distribution actually measured at Step S12 and the individual-depth ship speed theoretical curve 5 conformed to this at Step S13 may be calculated for the individual water depths and the obtained difference may be used as the tidal current distribution (Step S14). Then, whether termination of the ship speed acquiring processing is requested is determined based on an instruction from the user via the interface unit 34, an instruction from the controlling module 31 upon a given condition, etc. (Step S15), and if the termination request is not issued, Step S12 and the subsequent processings may be repeated. If the termination request is issued, the estimating processing of the tidal current distribution may be terminated.

Note that, regarding whether the divergence between the log speed based on the actual measurement data and the individual-depth ship speed theoretical curve 5 is due to the tidal current or due to the individual-depth ship speed theoretical curve 5 not being optimum, for example, whether it is based on the tendency of divergence in a previous given period of time may be determined and the processing illustrated in Fig. 2 of the first embodiment and the processing of this embodiment may be switched therebetween. When the distribution of the log speeds actually measured in the measurement range 4 is used for estimating the tidal current distribution as in this embodiment, different from the first embodiment, the true log speed in the measurement range 4 may be estimated based on the individual-depth ship speed theoretical curve 5 instead of on the actual measurement data.

As described above, according to the ship speedometer of the second embodiment of the present disclosure, by calculating the difference between the distribution of the log speed actually measured in the measurement range 4 and the individual-depth ship speed theoretical curve 5 conformed thereto, the tidal current distribution for the individual water depths around the ship body 1 may be estimated.

Although the invention made by the present inventors is described in detail based on the embodiments, it is needless to say that the present disclosure is not limited to the above embodiments and various modifications are possible without departing from the scope of the present disclosure. For example, the above embodiments are specifically described for easier understanding of the present disclosure, and not limited to necessarily include all the configurations described. Further, a part of the configuration of one embodiment is possible to be replaced with a configuration of another embodiment, or the configuration of the other embodiment is possible to be added to the configuration of the one embodiment. Furthermore, a part of the configuration of each embodiment is possible to be subjected to addition of another configuration, deletion or replacement.

### INDUSTRIAL APPLICABILITY

The present disclosure is useful for a ship speedometer and a ship speed acquiring method, in which a ship speed is measured at a plurality of depths.

### DESCRIPTION OF REFERENCE CHARACTERS

1: Ship Body, 2: Sensor, 3: Ship Speedometer Processor, 4: Measurement Range, 5: Individual-depth Ship Speed Theoretical Curve,
31: Controlling Module, 32: Measuring Module, 33: Ship Speed Calculating Module, 34: Interface Unit, 35: Measurement Data, 36: Theoretical Curve Data, 37: Setting Information, 38: Ship Speed Data

## Claims

1. A ship speedometer (2, 3) for measuring a log speed of a target ship (1), the ship speedometer comprising:
means (32) for measuring, in a fluid where the target ship (1) floats, a speed of a current at a plurality of different water depths within a given measurement range (4);
**characterized by**:
means (33) for conforming a theoretical curve of a log speed (5) for individual water depths, provided in advance and calculated in relation to the target ship (1), to a distribution of the current speeds for the individual water depths; and
means (33) for calculating a log speed at an arbitrary water depth deeper than the measurement range (4) based on the conformed theoretical curve (5).

2. The ship speedometer (2, 3) of claim 1, wherein the theoretical curve (5) is calculated based on the distribution of the current speeds for the individual water depths actually measured for the target ship (1).

3. The ship speedometer (2, 3) of claim 1, wherein the theoretical curve (5) is calculated based on a distribution of the current speeds for a plurality of different water depths within the measurement range (4) obtained from a result of analyzing a flow of fluid around the target ship (1) by a given simulation.

4. The ship speedometer (2, 3) of any one of claims 1 to 3, wherein the theoretical curve (5) is updated, for the target ship (1), based on statistical information of a plurality of distributions of the current speeds for the individual water depths actually measured by the ship speedometer.

5. The ship speedometer (2, 3) of any of the preceding claims, wherein a distribution of tidal currents for individual water depths within the measurement range (4) is calculated based on a difference between values of the measured current speeds for the individual water depths and the theoretical curve (5) conformed to the distribution of the current speeds for the individual water depths.

6. A method of measuring a log speed of a target ship, comprising:
a first process (S01) for calculating a theoretical curve (5) of a log speed for individual water depths, relating to the target ship (1); and
a second process (S02) for measuring a current speed at a plurality of different water depths within a given measurement range (4) for the target ship (1);
**characterized by**:
a third process (S03) for conforming the theoretical curve (5) to a distribution of the current speeds for the individual water depths; and
a fourth process (S06) for calculating a log speed at an arbitrary water depth deeper than the measurement range (4) based on the conformed theoretical curve (5).

7. The method of claim 6, wherein, in the first process (S01), the theoretical curve (5) is calculated based on the distribution of the current speeds for the individual water depths actually measured for the target ship (1).

8. The method of claim 6, wherein, in the first process (S01), the theoretical curve (5) is calculated based on a distribution of the current speeds for a plurality of different water depths within the measurement range (4) obtained from a result of analyzing a flow of fluid around the target ship (1) by a given simulation.

9. The method of any one of claims 6 to 8, further comprising a fifth process (S05) for updating the theoretical curve (5) based on statistical information of a plurality of distributions of the current speeds for the individual water depths actually measured by the ship speed acquiring method for the target ship (1).

10. The method of any of claims 6 to 9, further comprising a sixth process (S04) for calculating a distribution of tidal currents for individual water depths within the measurement range (4) based on a difference between values of the current speeds for the individual water depths acquired in the second process and the theoretical curve (5) conformed to the distribution of the current speeds for the individual water depths in the third process.

## Patentansprüche

1. Schiffsgeschwindigkeitsmesser (2, 3) zum Messen einer Loggeschwindigkeit eines Zielschiffes (1), wobei der Schiffsgeschwindigkeitsmesser Folgendes umfasst:
Mittel (32) zum Messen in einer Flüssigkeit, auf dem das Zielschiff (1) schwimmt, einer Geschwindigkeit einer Strömung bei einer Mehrzahl von verschiedenen Wassertiefen innerhalb eines vorgegebenen Messbereichs (4);
**gekennzeichnet durch**:
Mittel (33) zum Anpassen einer theoretischen Kurve einer Loggeschwindigkeit (5) für individuelle Wassertiefen, die im Voraus bereitgestellt werden und in Bezug auf das Zielschiff (1) berechnet werden, an eine Verteilung der Strömungsgeschwindigkeiten für die individuellen Wassertiefen; und
Mittel (33) zum Berechnen einer Loggeschwindigkeit bei einer beliebigen Wassertiefe, die tiefer als der Messbereich (4) ist, auf der Basis der angepassten theoretischen Kurve (5).

2. Schiffsgeschwindigkeitsmesser (2, 3) nach Anspruch 1, wobei die theoretische Kurve (5) auf der Basis der Verteilung der tatsächlich für das Zielschiff (1) gemessenen Strömungsgeschwindigkeiten für die individuellen Wassertiefen berechnet wird

3. Schiffsgeschwindigkeitsmesser (2, 3) nach Anspruch 1, wobei die theoretische Kurve (5) auf der Basis einer Verteilung der Strömungsgeschwindigkeiten für eine Mehrzahl von verschiedenen Wassertiefen innerhalb des Messbereichs (4) berechnet wird, die aus einem Ergebnis einer Analyse eines Flusses der Flüssigkeit um das Zielschiff (1) herum durch eine vorgegebene Simulation erhalten wird.

4. Schiffsgeschwindigkeitsmesser (2, 3) nach einem der Ansprüche 1 bis 3, wobei die theoretische Kurve (5) für das Zielschiff (1) auf der Basis von statistischer Information einer Mehrzahl von Verteilungen der vom Schiffsgeschwindigkeitsmesser tatsächlich gemessenen Strömungsgeschwindigkeiten für die individuellen Wassertiefen aktualisiert wird.

5. Schiffsgeschwindigkeitsmesser (2, 3) nach einem der vorangehenden Ansprüche, wobei eine Verteilung von Gezeitenströmungen für individuelle Wassertiefen innerhalb des Messbereichs (4) auf der Basis einer Differenz zwischen Werten der gemessenen Strömungsgeschwindigkeiten für individuelle Wassertiefen und der theoretischen Kurve (5), die an die Verteilung der Strömungsgeschwindigkeiten für die individuellen Wassertiefen angepasst ist, berechnet wird

6. Verfahren zum Messen einer Loggeschwindigkeit eines Zielschiffs, umfassend:
einen ersten Prozess (S01) zum Berechnen einer theoretischen Kurve (5) einer Loggeschwindigkeit für individuelle Wassertiefen in Bezug auf das Zielschiff (1); und
einen zweiten Prozess (S02) zum Messen einer Strömungsgeschwindigkeit bei einer Mehrzahl von verschiedenen Wassertiefen innerhalb eines vorgegebenen Messbereichs (4) für das Zielschiff (1);
**gekennzeichnet durch**:
einen dritten Prozess (S03) zum Anpassen der theoretischen Kurve (5) an eine Verteilung der Strömungsgeschwindigkeiten für die individuellen Wassertiefen; und
einen vierten Prozess (S06) zum Berechnen einer Loggeschwindigkeit bei einer beliebigen Wassertiefe, die tiefer als der Messbereich (4) ist, auf der Basis der angepassten theoretischen Kurve (5).

7. Verfahren nach Anspruch 6, wobei im ersten Prozess (S01) die theoretische Kurve (5) auf der Basis der Verteilung der tatsächlich für das Zielschiff (1) gemessenen Strömungsgeschwindigkeiten für die individuellen Wassertiefen berechnet wird.

8. Verfahren nach Anspruch 6, wobei im ersten Prozess (S01) die theoretische Kurve (5) auf der Basis einer Verteilung der Strömungsgeschwindigkeiten für eine Mehrzahl von verschiedenen Wassertiefen innerhalb des Messbereichs (4) berechnet wird, die aus einem Ergebnis einer Analyse eines Flusses der Flüssigkeit um das Zielschiff (1) herum durch eine vorgegebene Simulation erhalten wird.

9. Verfahren nach einem der Ansprüche 6 bis 8, ferner umfassend einen fünften Prozess (S05) zum Aktualisieren der theoretischen Kurve (5) auf der Basis von statistischer Information einer Mehrzahl von Verteilungen der durch das Erfassungsverfahren für die Schiffsgeschwindigkeit für das Zielschiff (1) tatsächlich gemessenen Strömungsgeschwindigkeiten für die individuellen Wassertiefen.

10. Verfahren nach einem der Ansprüche 6 bis 9, ferner umfassend einen sechsten Prozess (S04) zum Berechnen einer Verteilung von Gezeitenströmungen für individuelle Wassertiefen innerhalb des Messbereichs (4) auf der Basis einer Differenz zwischen Werten der im zweiten Prozess erfassten Strömungsgeschwindigkeiten für die individuellen Wassertiefen und der theoretischen Kurve (5), die an die Verteilung der Strömungsgeschwindigkeiten für die individuellen Wassertiefen im dritten Prozess angepasst ist.

## Revendications

1. Speedomètre de navire (2, 3) pour une mesure d'une vitesse loch d'un navire cible (1), le speedomètre de navire comprenant :
un moyen (32) de mesure, dans un fluide dans lequel le navire cible (1) flotte, d'une vitesse d'un courant à une pluralité de profondeurs d'eau différentes au sein d'une plage de mesures (4) donnée ;
**caractérisé par** :
un moyen (33) de conformation d'une courbe théorique d'une vitesse loch (5) pour des profondeurs d'eau individuelles, fournie à l'avance et calculée par rapport au navire cible (1), à une répartition des vitesses de courant pour les profondeurs d'eau individuelles ; et
un moyen (33) de calcul d'une vitesse loch à une profondeur d'eau arbitraire plus profonde que la plage de mesures (4) sur la base de la courbe théorique (5) conformée.

2. Speedomètre de navire (2, 3) selon la revendication 1, dans lequel la courbe théorique (5) est calculée sur la base de la répartition des vitesses de courant pour les profondeurs d'eau individuelles réellement mesurées pour le navire cible (1).

3. Speedomètre de navire (2, 3) selon la revendication 1, dans lequel la courbe théorique (5) est calculée sur la base d'une répartition des vitesses de courant pour une pluralité de profondeurs d'eau différentes au sein de la plage de mesures (4) obtenue à partir d'un résultat d'analyse d'un écoulement de fluide autour du navire cible (1) par une simulation donnée.

4. Speedomètre de navire (2, 3) selon l'une quelconque des revendications 1 à 3, dans lequel la courbe théorique (5) est mise à jour, pour le navire cible (1), sur la base d'informations statistiques d'une pluralité de répartitions des vitesses de courant pour les profondeurs d'eau individuelles réellement mesurées par le speedomètre de navire.

5. Speedomètre de navire (2, 3) selon l'une quelconque des revendications précédentes, dans lequel une répartition de courants de marée pour des profondeurs d'eau individuelles au sein de la plage de mesures (4) est calculée sur la base d'un écart entre des valeurs des vitesses de courant mesurées pour les profondeurs d'eau individuelles et la courbe théorique (5) conformée à la répartition des vitesses de courant pour les profondeurs d'eau individuelles.

6. Procédé de mesure d'une vitesse loch d'un navire cible, comprenant :
un premier processus (S01) pour un calcul d'une courbe théorique (5) d'une vitesse loch pour des profondeurs d'eau individuelles, relative au navire cible (1) ; et
un deuxième processus (S02) pour une mesure d'une vitesse de courant à une pluralité de profondeurs d'eau différentes au sein d'une plage de mesures (4) donnée pour le navire cible (1) ;
**caractérisé par** :
un troisième processus (S03) pour une conformation de la courbe théorique (5) à une répartition des vitesses de courant pour les profondeurs d'eau individuelles ; et
un quatrième processus (S06) pour un calcul d'une vitesse loch à une profondeur d'eau arbitraire plus profonde que la plage de mesures (4) sur la base de la courbe théorique (5) conformée.

7. Procédé selon la revendication 6, dans lequel, dans le premier processus (SO1), la courbe théorique (5) est calculée sur la base de la répartition des vitesses de courant pour les profondeurs d'eau individuelles réellement mesurées pour le navire cible (1).

8. Procédé selon la revendication 6, dans lequel, dans le premier processus (SO1), la courbe théorique (5) est calculée sur la base d'une répartition des vitesses de courant pour une pluralité de profondeurs d'eau différentes au sein de la plage de mesures (4) obtenue à partir d'un résultat d'analyse d'un écoulement de fluide autour du navire cible (1) par une simulation donnée.

9. Procédé selon l'une quelconque des revendications 6 à 8, comprenant en outre un cinquième processus (S05) pour une mise à jour de la courbe théorique (5) sur la base d'informations statistiques d'une pluralité de répartitions des vitesses de courant pour les profondeurs d'eau individuelles réellement mesurées par le procédé d'acquisition de vitesse de navire pour le navire cible (1).

10. Procédé selon l'une quelconque des revendications 6 à 9, comprenant en outre un sixième processus (S04) pour un calcul d'une répartition de courants de marée pour des profondeurs d'eau individuelles au sein de la plage de mesures (4) sur la base d'un écart entre des valeurs des vitesses de courant pour les profondeurs d'eau individuelles acquises dans le deuxième processus et la courbe théorique (5) conformée à la répartition des vitesses de courant pour les profondeurs d'eau individuelles dans le troisième processus.
